# EUROPEAN PATENT SPECIFICATION

(11) **EP 3 938 620 B1**
(45) Date of publication and mention of the grant of the patent: **12.06.2024**
(21) Application number: 20715435.2
(22) Date of filing: 11.03.2020
(51) Int. Cl.: E21B 43/017, E21B 41/00, B33Y 10/00, B33Y 80/00

(54) **METHOD OF MANUFACTURE AND ASSOCIATED APPARATUS FOR OIL/GAS INDUSTRY**
VERFAHREN ZUR HERSTELLUNG UND ZUGEHÖRIGE VORRICHTUNG FÜR DIE ÖL-/GASINDUSTRIE
PROCÉDÉ DE FABRICATION ET APPAREIL ASSOCIÉ POUR L'INDUSTRIE PÉTROLIÈRE/GAZIÈRE

(30) Priority: 14.03.2019 GB 201903492
(43) Date of publication of application: 19.01.2022
(73) Proprietor: Aker Solutions IP Ltd, London Greater London W4 5HR (GB)
(72) Inventor: SLATER, Robin, Aberdeenshire AB41 8HQ (GB); POLLOCK, Andrew, Aberdeen Aberdeenshire AB25 2RD (GB); OLSEN, Jim Stian, 0554 Oslo (NO)
(74) Representative: HGF
(86) International application number: PCT/GB2020/050611
(87) International publication number: WO 2020/183176

(56) References cited:
- WO-A1-00/08297
- WO-A1-2016/044910
- US-A1- 2018 104 759

## Description

### TECHNICAL FIELD

This disclosure concerns a method of manufacturing apparatus for subsea use, such as in the oil/gas industry; and associated apparatus. For example, the disclosure concerns methods of manufacturing wellhead apparatus, such as a manifold. In particular, but not exclusively, examples of the disclosure concern designing and manufacturing subsea control module ("SCM") manifolds with additive manufacturing.

### BACKGROUND

In the oil/gas industry, wellheads are at least partly controlled using SCMs. The SCM provides well control functions, particularly during the production phase of subsea oil/gas production. Typically, the SCM is located in a remote location relative to the surface control equipment. Communication signals and electrical and hydraulic power are provided via umbilicals, linking surface equipment to subsea equipment. The SCM contains electronics for performing a variety of functions, often including: processing communications signals, conditioning electrical power supplies, providing status information; and distributing signals and power to/from control valves, pressure/temperature sensors, and the like.

The control valves typically transmit hydraulic power to 'end devices' such as actuators, choke valves, and downhole safety valves. Pressure sensors often provide status information about the end devices as feedback. The SCM typically has hydraulic accumulators, filters, electronics vessels, and pressure/temperature compensation systems.

Electro hydraulic subsea control modules are made using subtractive manufacturing methods to machine and cross-drill complex hydraulic circuits connecting hydraulic supply, function and return lines to solenoid valves and external process valves. Directional control valves, flow meters and pressure transmitters are attached to these manifolds with fasteners and o-rings used to create preloaded, fluid tight seals. A subsea control module may have 30 or more such components, each sealing 4 fluid paths between manifold and functional component.

WO 2016/044910, considered the closest prior art, discloses a manifold comprising a block with at least one drilled header hole formed within the block, a plurality of drilled flow inlet holes (2) formed within the block, wherein the number of drilled flow inlet holes corresponds to the number of the plurality external flow lines that supply fluid (e.g., oil/gas) to the manifold and a plurality of isolation valves (5), (6) coupled to the block wherein the valve element for each of the isolation valves is positioned within the block.

US 2018/104759 discloses an oil, gas and/or petrochemical ferrous or non-ferrous material component including two or more segments of ferrous or non-ferrous components for joining, wherein the two or more segments are of the same or different materials, and laser metal deposition weldments bonding adjacent segments of said components together.

WO 00/08297 relates to subsea control modules or pods used in the subsea oil & gas industry as a local control source for subsea production trees, flow control choke valves and downhole instrumentation.

The subject matter of at least some examples of the present disclosure may be directed to overcoming, or at least reducing the effects of, one or more of the problems of the prior art, such as may be described above.

### SUMMARY

According to a first aspect there is provided a method of manufacture as defined in the claims. The method comprises manufacturing a SCM manifold.

The manifold may comprise one or more of: a SCM manifold; a template manifold; a cluster manifold; a pipeline end manifold.

The method comprises manufacturing the apparatus with a primary core. The primary core may represent a minimum functionality of the apparatus. In at least some examples, the primary core comprises one or more features associated with a minimum functionality of the apparatus. For example, where the apparatus is a particular type of apparatus, such as a SCM manifold, the primary core may comprise a minimum functionality of any of that particular type of apparatus (e.g. SCM manifold), such as at least a basic minimum functionality of any planned or envisaged apparatus of that particular type.

The primary core may comprise a minimum basic nucleus of the apparatus. The primary core may represent a compulsory template or guide for manufacturing the apparatus.

The method may comprise manufacturing a plurality of apparatuses. The plurality may comprise an array. The plurality of apparatuses may comprise a plurality of wellhead apparatuses. Each of the plurality of apparatuses may comprise a single, monolithic component.

The primary core may comprise a blueprint for manufacturing the plurality of apparatuses, the primary core comprising feature/s common or generic to each of the apparatuses of the plurality. The primary core may be non-configurable. For example, the primary core may be fixed, such as with parameters associated therewith being predetermined. All parameters associated with the primary core may be non-configurable.

The primary core may comprise a primary functionality of the apparatus. For example, the primary functionality may include all of the basic functions and/or features. All of the basic functions and/or features may comprise all of the basic functions and/or features common or generic to all apparatuses of the plurality. The primary core may be generic or common to a plurality of versions of the apparatus. The primary core may be defined based upon an analysis of past and/or planned apparatus to identify features and/or functions and/or portions common or generic to each of the past and/or planned versions of the apparatus.

The primary core may comprise one or more subsea tree (Christmas Tree, "XMT") valves. The primary core may comprise one or more valves selected from: a Production Master Valve; a Production Wing Valve; an Annulus Master Valve; an Annulus Wing Valve; Crossover Valve; a Production Choke Valve; a Subsurface Safety Valve (e.g. "SCSSV"). In at least some examples, the primary core comprises at least one of each of the aforementioned valves. The primary core may comprise control valves, such as directional control valves (DCVs). The primary core may comprise pairs of corresponding DCVs, such as a distinct DCV for opening and a distinct DCV for closing respectively. For example, the primary core may comprise a pair of Subsurface Safety Valve DCVs; and/or a pair of Production Choke Valve DCVs. The primary core may comprise a function/s for monitoring and selection of redundant hydraulic supply from surface via an umbilical. The primary core may comprise a high pressure supply selection valve. The high pressure selection valve may be configured to select between A and B redundant supplies; and optionally provide a single pressure header for high pressure functions, such as the SCSSV. The primary core may comprise a low pressure supply selection valve. The low pressure selection valve may be configured to select between A and B low pressure supplies; and optionally provide a single low pressure header for low pressure functions. The low pressure selection valve may be configured to provide low pressure supplies for other tree functions, such as for one or more of the master, wing and choke valves.

The primary core may comprise one or more pressure sensors for monitoring A and B supplies, such as for high and/or low pressure supply/ies. The primary core may comprise one or more pressure sensors for monitoring header pressure downstream of the supply selection valve/s. The primary core may comprise one or more filter/s, or at least port/s to connect supply filters to a primary core manifold. The primary core may comprise one or more pressure accumulators, or at least ports for connection of pressure accumulators (e.g. high pressure and low pressure accumulator connections).

The method may comprise customising the apparatus. For example, the method may comprise customising the apparatus to provide a bespoke SCM manifold. The method may comprise customising the apparatus electronically or virtually prior to physical manufacture. For example, the method may comprise customising a model of the apparatus, such as a CAD model or the like, prior to manufacturing, or prior to completion of manufacturing. The method comprises customising the apparatus by selecting one or more optional feature/s. The one or more optional feature/s may represent optional module/s. The one or more optional feature/s may each be associated with a related functionality. The one or more optional feature/s may be predetermined. The one or more optional features may be selectable, such as from a library or database of predefined features. The optional features may be predefined, such that validation, analysis and/or verification of the model and/or apparatus may be reduced or eliminated. The method may comprise providing only a limited selection of optional feature/s and/or function/s. The method may comprise providing a limited number of predetermined or defined optional feature/s and/or function/s from which to select. The method may comprise providing predefined optional feature/s and/or function/s such that all permutations are at least one of: certified; validated; approved; within specified parameters (e.g. safety parameters). The method may comprise ensuring that all designs and/or apparatus manufactured to the design/s are compliant with requirements, such as compliant with industry/safety/practical/use requirements. The method may comprise pre-emptively ensuring that all designs and/or apparatus are compliant. The method may comprise ensuring that all designs and/or apparatus are compliant without requiring post-design and/or post-manufacturing verification, validation and/or testing.

The method may comprise analysing permutations of the primary core and optional features. The method may comprise pre-emptively analysing permutations. The method may comprise analysing permutations prior to defining the primary core and/or the optional features. The method may comprise only providing selectable optional features where selection of those optional features would result in a compliant apparatus (e.g. where compliance with a safety requirement or the like has been pre-approved).

The method may comprise designing the primary core. The method may comprise analysing possible uses or applications of the apparatus, or type of apparatus, such as all possible past and/or envisaged uses or applications of the apparatus, or type of apparatus. The method may comprise identifying features and/or functions common or generic to multiple uses or applications, such as all possible past and/or envisaged uses or applications of the apparatus or type of apparatus. The method may comprise analysing past and/or planned apparatus to identify feature/s and/or function/s and/or portion/s generic or common to a plurality of the apparatus, such as to each of the plurality of the apparatus. The method may comprise defining the primary core of the SCM manifold based upon an in-depth knowledge of the subsea system applications. The method may comprise identifying functions required for all subsea systems for inclusion in the design of the primary core. The functions and/or feature/s and/or portion/s of the primary core may be interdependent for an integrity, such as a structural integrity, of the apparatus.

The method may comprise defining the primary core such that the primary core comprises all functions and/or features of a particular type or category. For example, the primary core may comprise all electrical and/or hydraulic and/or communication input/s and/or output/s, at least of a particular type, to the apparatus. The primary core may comprise all electrical and/or hydraulic and/or communication input/s, at least of a particular type/s, between the SCM manifold and, for example, surface (e.g. via an umbilical/s).

The method may comprise designing and/or manufacturing the apparatus without requiring design validation of each individual apparatus, or each version thereof. The method may comprise designing the apparatus without requiring a validation, analysis or verification of the design and/or apparatus. The method may comprise designing the plurality of apparatus without requiring the validation, analysis and/or verification of each design and/or apparatus of the plurality. The method may comprise defining the primary core such that each apparatus manufactured or manufacturable with the primary core satisfies at least one requirement, such as may otherwise or conventionally be required to be satisfied by one or more of analysis, verification and/or validation. The method may comprise defining the optional function/s and/or feature/s such that each apparatus manufactured or manufacturable with the optional function/s and/or feature/s satisfies at least one requirement. The method may comprise designing the primary core in combination with the optional function/s and/or feature/s such that customising and/or manufacturing apparatus to the design does not require validation, analysis and/or verification of at least one aspect of each design and/or apparatus. For example, the method may comprise obviating an assessment of an integrity, such as a structural integrity, of each design and/or apparatus. The method may comprise validation, analysis and/or verification prior to the customisation of the design/s. The method may comprise the validation, analysis and/or verification of the primary core.

The method may comprise the validation, analysis and/or verification of the primary core prior to permanently defining the primary core, such as permanently defining to fix or set the primary core to be non-configurable. The method may comprise the validation, analysis and/or verification of the optional function/s and/or feature/s prior to permanently defining the primary core. The method may comprise the validation, analysis and/or verification of the optional function/s and/or feature/s prior to permanently defining the optional function/s and/or feature/s. The method may comprise the validation, analysis and/or verification of a combination/s of the optional function/s and/or feature/s prior to permanently defining the optional function/feature/s and/or the primary core. The method may comprise the validation, analysis and/or verification of all combinations of the optional function/s and/or feature/s prior to permanent definition. The method may comprise the validation, analysis and/or verification of the combination/s of the optional function/s and/or feature/s to limit a selectability of one or more combinations of the optional function/s and/or feature/s. For example, the method may comprise limiting or preventing a selection of a second optional feature where a particular first optional feature has already been selected for the design of a particular apparatus or particular version of apparatus. The method may comprise defining selectability of combinations of optional function/s and/or feature/s.

The versions of the plurality of apparatus may comprise variations of a same type of apparatus. The variations may be provided by differences in the optional feature/s. The same type of apparatus may comprise a same type of SCM for a XMT. Accordingly, the method may comprise providing a plurality of SCMs for a plurality of applications, each SCM comprising a similar primary core with similar features. The respective SCMs may be configured for different applications, such as for different XMTs with different functional requirements.

The same type of apparatus may comprise a same type of SCM apparatus, such as a same type of SCM manifold. The same type of apparatus may comprise all types of SCM manifold. The same type of SCM manifold may comprise only one of: a XMT manifold; a template manifold; a cluster manifold; a pipeline end manifold. For example, a first type of SCM manifold may comprise a XMT manifold; and a second type of SCM manifold may comprise a pipeline end manifold. Accordingly, each of a XMT manifold; a template manifold; a cluster manifold; and/or a pipeline end manifold may each comprise a different primary core (e.g. a template manifold primary core may be different from a pipeline end manifold primary core). Alternatively, the same type of SCM manifold may comprise all of: a template manifold; a cluster manifold; a pipeline end manifold. Accordingly, a single, same primary core may be used in the manufacture of each of a plurality selected from: a XMT manifold; a template manifold; a cluster manifold; and a pipeline end manifold.

The method may comprise customising only optional features and/or optional functions and/or optional portions of the apparatus. The method may comprise not customising the primary core. The method may comprise preventing or prohibiting the customisation of the primary core. The method may comprise preventing or prohibiting the customisation of the primary core following the definition of the primary core. The method may comprise customising the apparatus solely by the addition, such as by selection, of features supplemental to the primary core.

In at least some examples, the method may comprise manufacturing an apparatus comprising only the primary core and no optional features. The primary core may provide a sufficient functionality such that an apparatus comprising only the primary core may be a functional apparatus capable of fulfilling at least a most basic functionality. For example, an SCM manifold comprising only the primary core may be suitable for use as a most basic SCM manifold.

The method may comprise providing at least one interface in the primary core of the apparatus. The primary core may comprise primary interfaces. The primary interfaces may be for a primary supply/ies and/or output/s to and/or from the apparatus. For example, the primary interfaces may be for between the SCM manifold and, for example, surface (e.g. via an umbilical/s). The method may comprise providing the primary core with secondary interfaces, such as for end device/s. The secondary interface/s may be for connection and/or attachment to secondary feature/s and/or device/s. In at least some examples, the secondary interface/s may comprise interface/s for connection, and optionally attachment, to a control valve/s.

The function/s and/or feature/s of the primary core may comprise function/s and/or feature/s similar to the optional feature/s and/or optional function/s. For example, the optional feature/s and/or function/s may comprise additional similar function/s and/or feature/s, such as additional function/s and/or feature/s of with similar properties to one or more primary core functions or features. In at least some examples, the primary core comprises a primary number of connections. The method may comprise providing additional connections by the selection of optional function/s and/or feature/s. In at least some examples, the method comprises providing the SCM manifold with a basic number of control valve connections (e.g. Directional Control Valve, "DCV", connections) in the primary core. Additional control valve connections may be selectable as optional features. For example, where the SCM manifold is intended for use with possible connection to more lines than provided for with the primary core, then the method may comprise providing those possible connections as additional connections in optional modules added to the primary core.

In at least some examples, the method comprises defining a fixed number of function/s and/or feature/s in the primary core. The primary core may comprise a maximum number of function/s and/or feature/s. The primary core may comprise a minimum number of function/s and/or feature/s. For example, the primary core may comprise a fixed number of connection points; such as for a fixed number of DCVs. The method may comprise providing the primary core in a model form, such as a CAD model. The primary core of the model form may be non-configurable. For example, following definition of the single primary core model form, at least some parameters associated with the primary core may be non-configurable. The primary core may comprise a partial portion of a total model. The total model may comprise optional function/s and/or feature/s in addition to the primary core. The optional function/s and/or feature/s may be external to the primary core. For example, the primary core may represent a physical portion of the apparatus, such as a physical inner core; and the optional function/s and/or feature/s may be physically added to extend the physical extent of the primary core. Additionally or alternatively, the optional function/s and/or feature/s may be internal, within the primary core. For example, at least some of the optional function/s and/or feature/s may be physically within a space or volume defined by the primary core.

The primary core may comprise a plurality of hydraulic functions. Each of the hydraulic functions may comprise a hydraulic interface. In at least some examples, the primary core comprises at least 12 hydraulic functions. The primary core may comprise non-hydraulic functions. For example, the primary core may comprise one or more electrical connections or connectors. In at least some examples, all of the functions may be fully-functional. In at least some applications the functions may be or may become redundant. For example, the primary core may comprise a plurality of hydraulic and/or electrical connectors, with each connector being fully functional (e.g. all electrical connectors comprising fully-wired pins); even although not all planned uses comprising the primary core require all being fully-functional. In at least some examples, the primary core comprises one or more functions for redundancy.

The optional function/s and/or feature/s may be defined as modules. The method may comprise providing the modules as repeatable modules. Accordingly, the design of the apparatus may be customised by developing a cell structure of the apparatus by the addition of optional modules. The method may comprise configuring the design of each apparatus to optimise a pattern or location of optional modules. The method may comprise defining each module such that each module has its own structural integrity, independent of other module/s. The modules may comprise common feature/s and/or parameter/s. The method may comprise selecting a number of modules. For example, the method may comprise selecting a particular number of modules to suit a particular apparatus for a particular use or application. Each of the plurality or number of modules may comprise a similar function/s and/or feature/s. For example, each module may comprise a same interface and/or a same connection means. Each module may comprise generic features common to every module. Each module may be substantially the same. Each module may comprise at least a same set of base parameters. The/each module may comprise one or more configurable parameter/s or feature/s. At least some of the modules may comprise a control valve interface, such as for connecting a DCV. The control valve interface may comprise a fluid interface/s and/or a fastener interface/s.

The method may comprise manufacturing the apparatus with only the function/s and/or feature/s required for that apparatus, such as for a particular planned use or deployment of that particular apparatus. Accordingly, the apparatus may be manufactured with no supplemental, redundant or unnecessary feature/s and/or function/s. For example, the apparatus may be manufactured with an optimum number of optional feature/s and/or function/s. The method may comprise customising the design and/or apparatus to provide the manufactured with an optimum number of feature/s and/or function/s, such as an optimum number of feature/s and/or function/s for an envisaged use. In at least some examples, the method comprises manufacturing the plurality of SCM manifolds, with each SCM manifold comprising an optimum arrangement of function/s and/or feature/s (e.g. an optimum number and location of control valves or control valve connections).

The method comprises manufacturing the apparatus as a single, monolithic component. The single monolithic component may define a housing of the apparatus. The single monolithic component may comprise a body of the apparatus. The single, monolithic component may comprise a unitary, integrally-formed component. The single monolithic component may comprise a seamless component, such as devoid of internal seams, joins, welds, abutments or the like. The single monolithic component may be unitary. The single monolithic component may be integrally-formed. In at least some examples, the method comprises a method of manufacturing a SCM manifold as a single monolithic monoblock, the monoblock integrally comprising the fluid passages of the SCM manifold.

The method comprises additive manufacturing. The additive manufacturing may comprise 3D printing. The additive manufacturing may comprise of, but is not limited to, one or more of the following technologies: Powder bed based systems such as Selective Laser Melting (SLM), Electron Beam Melting (EBM), Direct Metal Laser Sintering (DMLS), Selective Laser Sintering (SLS), Binder Jetting (BJ), Metal Binder Jetting (MBJ); Powder fed systems such as Laser Cladding (LC), Direct Energy Deposition (DED), Laser Metal Deposition (LMD); Wire fed systems such as Wire Arc Additive Manufacturing (WAAM); Polymer and Composite additive manufacturing systems such as Fused Deposit Modelling (FDM), Vat polymerization, Stereolithography (SLA), Digital Light Processing (DLP). In at least some examples, the method may comprise the DMLS of the monolithic apparatus, configured to withstand high pressure, such as with grade metal suitable to withstand the high pressure when 3D printed.

The method may comprise manufacturing the apparatus without subtractive manufacturing techniques. For example, the method may comprise forming at least a body or housing of the apparatus without either of drilling or milling. The method may comprise forming a passage/s without subtractive manufacture, such as without drilling or milling.

The method may comprise providing one or more passages, recesses and/or chambers in the apparatus. The method may comprise providing the passages, recesses and/or chambers integrally-formed in the apparatus. The passages, recesses and/or chambers may be for fluid, such as high pressure fluid.

The method may comprise mitigating, reducing and/or eliminating one or more of: blind passage/s; plugged passage/s or plugged portions thereof; welding and/or welds; seals; O-rings; internal seals; and/or attached components. The method may comprise providing the fluid passage/s as continuous fluid passage/s. The method may comprise providing the/each fluid passage/s as a seamless internal passage/s. The method may comprise providing the fluid passage/s so as to reduce risk or likelihood of accumulations or depositions, such as associated with particles, dirt, condensates or the like that could be carried by or in the fluid passage/s. For example, the method may comprise eliminating or at least reducing 'dead space' in, or in communication, with the fluid passage/s, such as dead ends that may be associated with conventional manifolds, such as produced by cross-drilling.

The method may comprise integrally-forming one or more functional devices or features with the apparatus. The one or more functional devices or features may comprise functional devices or features conventionally subsequently attached or connected to the apparatus. The method may comprise an elimination or reduction in an attachment or connection of devices or features to the apparatus. The method may comprise an elimination or reduction in a number of attachment/s or connection/s of devices or features to the apparatus. In at least some examples, the method comprises integrally-forming devices or features conventionally subsequently attached and/or connected to the SCM manifold. In at least some examples, the method comprises integrally-forming one or more valves, such as DCV, or at least portion/s thereof, with the SCM manifold. The method may comprise reducing or eliminating a number of seals and/or seams and/or components. For example, the method may comprise manufacturing a SCM manifold with a reduced number of seals (e.g. o-rings), such as compared to a conventionally-manufactured SCM manifold with milled and/or drilled fluid passages.

The method may comprise the additive manufacture of a high-pressure apparatus. In at least some examples, the method may comprise the additive manufacture of wellhead apparatus configured to and capable of withstanding a fluid pressure. The fluid pressure may be associated with a wellbore fluid. Additionally, or alternatively, the fluid pressure may be associated with a hydraulic fluid, such as a hydraulic control fluid. The fluid pressure may be High Pressure, such as up to: 50 bar; 100 bar; 200 bar; 250 bar; 300 bar; 500 bar; 1000 bar; 1400 bar; 1500bar; (1 bar representing 100kpa) or more. The fluid pressure may be internal, such as within one or more internal fluid passage/s of the apparatus. The apparatus may be configured to withstand a rapid change in fluid pressure, such as from an environmental or an ambient pressure to a maximum fluid pressure within a short time interval. The method may comprise manufacturing the apparatus to withstand rapid fluctuations or oscillations in pressure/s. The apparatus may be configured to withstand or contain multiple fluid pressures simultaneously, such as with different fluid pressures in different portions or passages of the apparatus. The apparatus may be configured to withstand a pressure differentials, such as between internal and external pressures.

The method may comprise integrally-forming one or more fastening feature/s of the apparatus. For example, the method may comprise integrally-forming attachment points or nodes of the SCM manifold, for attaching the SCM manifold (e.g. to a base plate, XMT, lifting apparatus and/or transportation apparatus, or the like); and/or for attaching device/s to the SCM manifold (e.g. supply lines, communication lines and/or ancillary apparatus, or the like).

The method may comprise providing a plurality of configurations of the apparatus, each configuration comprising the primary core. The method may comprise providing variations between the configurations solely based upon the selection of optional features, with the primary core being generic across all of the configurations.

The method may comprise optimising the apparatus. In at least some examples, the method may comprise designing and/or manufacturing the apparatus to provide an optimised apparatus. The apparatus may be optimised for manufacture; transport; deployment and/or use. In at least some examples, the method may comprise optimising the design and/or manufacture of the apparatus to minimise or at least reduce redundant or unnecessary material and/or feature/s.

The method may comprise transferring manufacturing instructions, such as to or from a computer (e.g. vie internet, e-mail, file transfer, web or the like). In at least some examples, the method may comprise printing at least one component of the apparatus, such as the SCM manifold. For example, the method may comprise 3D printing all of the features of the SCM manifold. The SCM manifold may be supplied in a final-use configuration, such as ready for connection and/or attachment to associated device/s (e.g. at the wellhead).

According to a further aspect there is provided an apparatus designed and/or manufactured according to the method of any other aspect, example, embodiment or claim.

According to a further aspect there are provided at least some examples of an oil/gas apparatus comprising the apparatus of any other aspect, example, embodiment or claim. The oil/gas apparatus may comprise wellhead apparatus, such as a manifold.

The manifold may comprise a fluid pathway. The fluid pathway may be for hydraulic fluid. The hydraulic fluid may be for pressurisation and/or activation and/or deactivation, such as of one or more valves, actuators or devices. In at least some examples, the hydraulic fluid may comprise a control fluid.

The apparatus may comprise a primary core. The primary core may be common or generic to a plurality of apparatus, such as a plurality of versions or configurations of the apparatus. The apparatus may comprise a selection of optional feature/s and/or function/s.

According to a further aspect, there is provided an array of apparatus according to any other aspect, example, embodiment or claim.

According to a further aspect, there is provided an array of apparatus, the apparatus designed and/or manufactured according to the method/s of any other aspect, example, embodiment or claim.

According to a further aspect there is provided a method of simulating or modelling the method and/or apparatus, such as a SCM manifold, according to any other aspect, embodiment, example or claim.

Another aspect of the present disclosure provides a computer program comprising instructions arranged, when executed, to implement a method in accordance with any other aspect, example, claim or embodiment. A further aspect provides machine-readable storage storing such a program. The storage may be non-transitory.

According to an aspect of the invention, there is provided computer software which, when executed by a processing means, is arranged to perform a method according to any other aspect, example, claim or embodiment. The computer software may be stored on a computer readable medium. The computer software may be tangibly stored on a computer readable medium. The computer readable medium may be non-transitory.

The invention includes one or more corresponding aspects, embodiments or features in isolation or in various combinations whether or not specifically stated (including claimed) in that combination or in isolation. For example, it will readily be appreciated that features recited as optional with respect to the first aspect may be additionally applicable with respect to the other aspects without the need to explicitly and unnecessarily list those various combinations and permutations here (e.g. the apparatus of one aspect may comprise features of any other aspect). Optional features as recited in respect of a method may be additionally applicable to an apparatus or device; and vice versa. The apparatus or device of one aspect, example, embodiment or claim may be configured to perform a feature of a method of any aspect, example, embodiment or claim. In addition, corresponding means for performing one or more of the discussed functions are also within the present disclosure.

It will be appreciated that one or more embodiments/aspects may be useful in at least manufacturing apparatus, such as a SCM manifold/s.

The above summary is intended to be merely exemplary and non-limiting.

Various respective aspects and features of the present disclosure are defined in the appended claims.

It may be an aim of certain embodiments of the present disclosure to solve, mitigate or obviate, at least partly, at least one of the problems and/or disadvantages associated with the prior art. Certain embodiments or examples may aim to provide at least one of the advantages described herein.

### BRIEF DESCRIPTION OF THE DRAWINGS

These and other aspects of the present invention will now be described, by way of example only, with reference to the accompanying drawings, in which:
Figure 1 is a flow chart illustrating a method according to the present disclosure;
Figure 2 is an apparatus designed or manufactured according to the method of Figure 1
Figure 3a is a portion of the apparatus of Figure 2;
Figure 3b is a side view of the portion of Figure 3a;
Figure 4a is a detailed view of Figure 3a;
Figure 4b is a detailed view of Figure 3b;
Figure 5 is a view of an apparatus manufactured according to the method of Figure 1;
Figure 6 is a view of a primary core for the apparatus of Figure 5; and
Figure 7 is a view of another apparatus manufactured according to the method of Figure 1.

### DETAILED DESCRIPTION

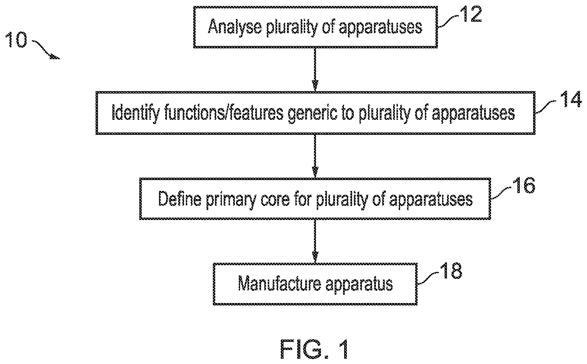

Referring first to Figure 1, there is shown a method of manufacture 10 according to an aspect of the present disclosure. The method of manufacture 10 comprises the steps of: analysing a plurality of apparatuses 12; identifying functions/features generic to the plurality of apparatuses 14; defining a primary core for the plurality of apparatuses 16; and manufacturing an apparatus 18.

In at least some examples, the method of manufacture comprises the steps shown in Figure 1, along with any, preferably all, of the additional steps of:
- Define the optional functions / features that will depend on specific applications;
- Validate all expected permutations of core + optional features;
- Configure manifold according to specific application (core + specific optional functions); transmit configuration to supply chain.

Typically, these steps are performed sequentially between the step 16 of Defining primary core for plurality of apparatuses and the step 18 of manufacture apparatus of Figure 1. Accordingly, such a manufacture apparatus step 18 comprises manufacturing application-specific apparatus configuration.

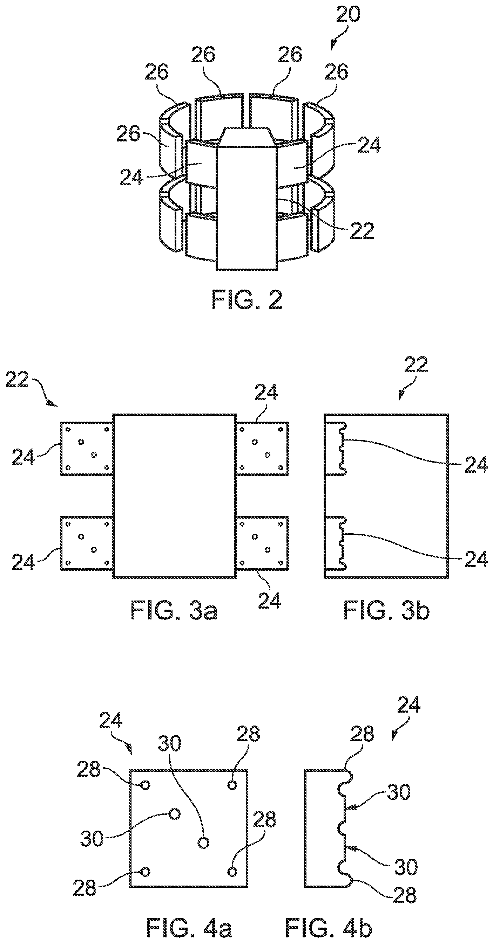

Figures 2 through 7, provide examples of apparatus 20, 120, 220 manufactured according to the method of Figure 1. As shown here, there is provided apparatus 20, 120, 220 in the form of a subsea control module ("SCM") manifold for controlling a Xmas Tree ("XMT"). Accordingly, the method 10 is shown here as applied to manufacturing a SCM manifold for a XMT.

The method comprises manufacturing the apparatus 20, 120, 220 with a primary core 22. The primary core 22 represents a minimum functionality of the apparatus 20, 120, 220. In at least some examples, the primary core 22 comprises one or more features associated with a minimum functionality of the apparatus 20, 120, 220. For example, where the apparatus 20, 120, 220 is a particular type of apparatus, such as a SCM manifold, the primary core 22 comprises a minimum functionality of any of that particular type of apparatus 20, 120, 220 (e.g. SCM manifold), such as at least a basic minimum functionality of any planned or envisaged apparatus 20, 120, 220 of that particular type. The primary core 22 comprises a minimum basic nucleus of the apparatus 20, 120, 220. The primary core 22 represents a compulsory template or guide for manufacturing the apparatus 20, 120, 220.

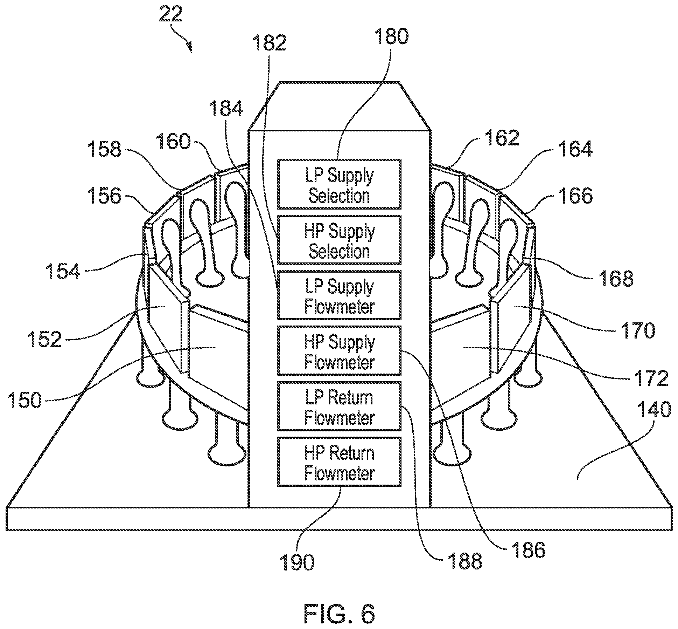

The primary core 22 comprises pressure sensors for monitoring A and B supplies, for high and low pressure supplies. The primary core 22 comprises pressure sensors for monitoring header pressure downstream of the supply selection valves 180, 182. The primary core 22 comprises filters, or at least ports to connect supply filters to the primary core manifold. The primary core 22 comprises high pressure and low pressure accumulator connections. Here, the primary core 22, as illustrated in Figure 6 in particular, comprises the functions of: a Low Pressure ("LP") Supply Selection 180; a High Pressure ("HP") Supply Selection 182; a LP Supply Flowmeter 184; a HP Supply Flowmeter 186: a LP Return Flowmeter 188; and a HP Return Flowmeter 190.

The example of a primary core 22 shown in Figure 6 comprises connections 24 for: an Annulus Master Valve DCV 150; an Annulus Wing Valve DCV 152; a Subsurface Safety Valve Close DCV 154; a Crossover Valve; a Production Choke Valve Close DCV 156; a Production Choke Valve Open DCV 158; a Subsurface Safety Valve Open DCV 160; an isolation valve 1 DCV 162; an isolation valve 2 DCV 164; an isolation valve 3 DCV 166; a crossover valve DCV 168; a Production Wing Valve 170; and a Production Master Valve DCV 172. It will be appreciated that in some examples, the primary core 22 comprises the DCVs as such.

The method comprises designing the primary core 22. The method comprises analysing possible uses or applications of the apparatus, or type of apparatus, such as all possible past and envisaged uses or applications of the apparatus, or type of apparatus 20, 120, 220. The method comprises identifying features and functions common or generic to multiple uses or applications, such as all possible past and envisaged uses or applications of the apparatus 20, 120, 220 or type of apparatus 20, 120, 220. The method comprises analysing past and planned apparatus 20, 120, 220 to identify features and functions and portion/s generic or common to a plurality of the apparatus, such as to each of the plurality of the apparatus 20, 120, 220. The method comprises defining the primary core 22 of the SCM manifold based upon an in-depth knowledge of the subsea system applications. The method comprises identifying functions required for all subsea systems for inclusion in the design of the primary core 22. The functions and features and portion/s of the primary core 22 is interdependent for an integrity, such as a structural integrity, of the apparatus 20, 120, 220.

The primary core 22 comprises a primary functionality of the apparatus 20, 120, 220. For example, the primary functionality includes all of the basic functions and features common or generic to all apparatuses of the plurality. The primary core 22 is generic or common to a plurality of versions of the apparatus 20, 120, 220. As shown in the first step 12 of the method of Figure 1, the primary core 22 is defined based upon an analysis of past and planned apparatus 20, 120, 220 to identify features and functions and portions common or generic to each of the past and planned versions of the apparatus 20, 120, 220.

In the particular examples of apparatus 20, 120, 220 shown here in Figures 2 to 7, the method comprises customising the apparatus 20, 120, 220. For example, the method comprises customising a CAD model of the apparatus 20, 120, 220 prior to manufacturing, by selecting optional features. The optional features represent optional modules, each associated with a related functionality. The optional features are selectable, from a limited availability of optional features provided in a library or database of predefined features, such that validation, analysis and verification of the model and apparatus 20, 120, 220 is reduced or eliminated. The method comprises providing predefined optional features and functions such that all permutations are at least one of: certified; validated; approved; within specified parameters (e.g. safety parameters). The method comprises pre-emptively ensuring that all designs and apparatus 20, 120, 220 manufactured to the design/s are compliant with requirements, such as compliant with industry/safety/practical/use requirements, without requiring post-design and post-manufacturing verification, validation and testing.

The method comprises analysing permutations of the primary core 22 and optional features. The method comprises pre-emptively analysing permutations prior to defining the primary core 22 and the optional features. The method comprises only providing selectable optional features where selection of those optional features would result in a compliant apparatus 20, 120, 220 (e.g. where compliance with a safety requirement or the like has been pre-approved). The method comprises designing and manufacturing the apparatus 20, 120, 220 without requiring design validation of each individual apparatus, or each version thereof. The method comprises defining the primary core 22 in combination with the optional functions and features such that customising and manufacturing apparatus 20, 120, 220 does not require validation, analysis and verification of at least one aspect of each design and apparatus 20, 120, 220. For example, the method comprises obviating an assessment of a structural integrity of each design and apparatus 20, 120, 220.

The method comprises the validation, analysis and verification of the primary core 22 and the optional functions and features prior to permanently defining the primary core 22 to fix or set the primary core 22 to be non-configurable. The method comprises the validation, analysis and verification of the optional functions and features, and all combinations thereof, prior to permanently defining the optional functions and features, such as between the last two steps 16, 18 shown in Figure 1. The method comprises the validation, analysis and verification of the combination/s of the optional functions and features to limit a selectability of one or more combinations of the optional functions and features. For example, the method comprises limiting or preventing a selection of a second optional feature where a particular first optional feature has already been selected for the design of a particular apparatus 20, 120, 220 or particular version of apparatus 20, 120, 220. The method comprises customising only optional features and optional functions and optional portions of the apparatus 20, 120, 220. The method comprises preventing or prohibiting the customisation of the primary core 22 following the definition of the primary core 22. The method comprises customising the apparatus 20, 120, 220 solely by the addition, by selection, of features supplemental to the primary core 22.

The versions of the plurality of apparatus 20, 120, 220 comprise variations of a same type of apparatus 20, 120, 220. The variations are provided by differences in the optional features. As shown here, the same type of apparatus 20, 120, 220 comprises a same type of SCM manifold. Accordingly, a single, same primary core 22 is used in the manufacture of each of the SCM manifolds 20, 120, 220 shown in Figures 2 to 7. Here the optional features and functions comprise additional similar functions and features to at least some of the primary core 22 functions or features. For example, the primary core 22 comprises a number of control valve connections 24 (e.g. Directional Control Valve, "DCV", connections). Here the primary core 22 comprises twelve connections 24 in the form of: the Annulus Master Valve DCV 150; the Annulus Wing Valve DCV 152; the Subsurface Safety Valve Close DCV 154; the Crossover Valve; the Production Choke Valve Close DCV 156; the Production Choke Valve Open DCV 158; the Subsurface Safety Valve Open DCV 160; the isolation valve 1 DCV 162; an isolation valve 2 DCV 164; the isolation valve 3 DCV 166; the crossover valve DCV 168; the Production Wing Valve 170; and the Production Master Valve DCV 172. It will be appreciated that in other embodiments the primary core 22 comprises a different number of such functions. For example, other examples of primary cores (not shown) comprise fewer or more isolation valve DCVs.

The method comprises providing additional connections 26, 126, 226, by the selection of optional functions and features. Additional control valve connections 26, 126, 226, are selectable as optional features.

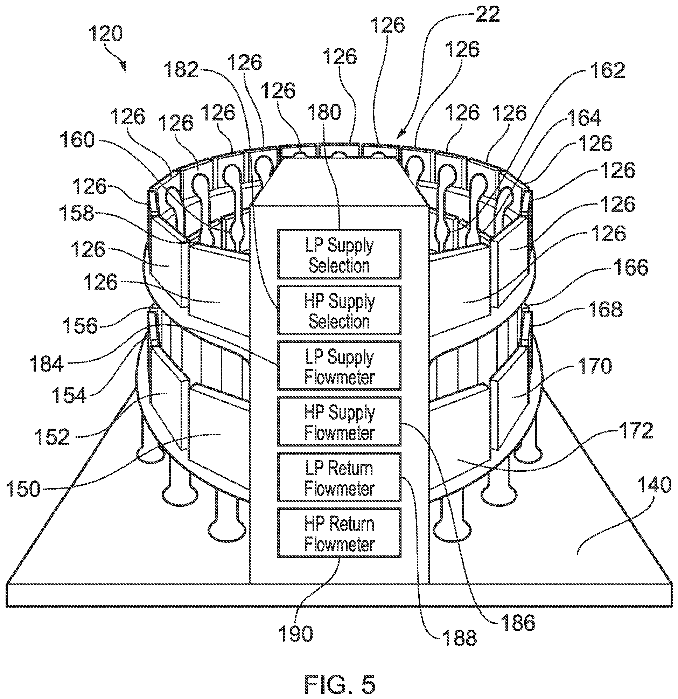

Accordingly, here, the method comprises defining a fixed number of functions and features in the primary core 22, with a fixed number of connection points 24; for a fixed number of DCVs. The method comprises providing the primary core 22 in a CAD model, the primary core 22 being non-configurable. That is, following definition of the single primary core 22 model form (e.g. in the third step 16 of the method of Figure 1), at least some parameters associated with the primary core 22 are non-configurable. As can be seen from Figures 5 to 7, the primary core 22 comprises a partial portion of a total model, the total model comprising optional functions and features 26, 126, 226, in addition to the primary core 22, which are external to the primary core 22 here.

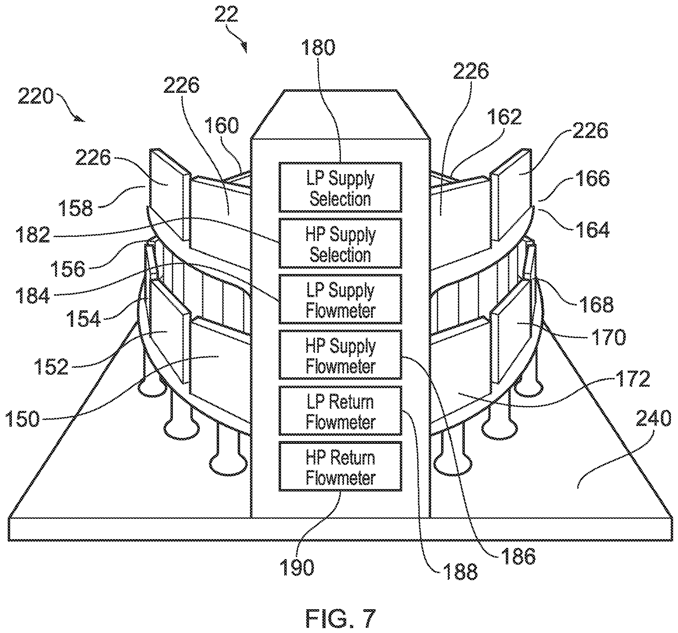

In Figures 5 and 6, there is shown a SCM manifold 120 according to a second example of the present disclosure. The SCM manifold 120 shown in Figure 5 is generally similar to that shown in Figure 2, with similar features denoted by similar references numerals, incremented by 100. Accordingly, the SCM manifold 120 comprises optional features 126. In Figure 7, there is shown a SCM manifold 220 according to a third example of the present disclosure. The SCM manifold 220 shown in Figure 7 is generally similar to that shown in Figures 5 and 6, with similar features denoted by similar references numerals, incremented by 100. Accordingly, the SCM manifold 220 comprises optional features 226. For brevity, a description of not all detailed features is duplicated for all examples. It will be appreciated that all examples 20, 120, 220 shown here comprise a common design of primary core 22. The SCM manifolds 120, 220 are shown mounted on templates 140, 240. It will be appreciated that in some examples the SCM manifolds 120, 220 comprise the templates 140, 240, being incorporated in the single monolithic, integrally-formed structure.

The optional functions and features 26, 126, 226 are defined as modules, provided as repeatable modules. Accordingly, the design of the apparatus 20, 120, 220 is customised by developing a cell structure of the apparatus 20, 120, 220 by the addition of optional modules. The method comprises configuring the design of each apparatus 20, 120, 220 to optimise a pattern or location of the optional modules 26, 126, 226. The method comprises defining each module such that each module has its own structural integrity, independent of other modules. The modules comprise common features and parameter/s. As shown in Figure 4a, each module comprises a common arrangement of fastener interface features 28 and fluid interface features 30. The method comprises selecting a particular number of modules to suit a particular apparatus 20, 120, 220 for a particular use or application. The method comprises integrally-forming the fastener interface features 28 of the apparatus 20, 120, 220 for fastening to the SCM manifold (e.g. DCVs). The apparatus 120 shown in Figure 5 comprises 17 optional features 126, enabling 17 additional functions, such as connections for 17 additional DCVs. The apparatus 220 shown in Figure 7 comprises four optional features 226, enabling four additional functions, such as connections for four additional DCVs.

In at least some examples, the method comprises defining the primary core 22 such that the primary core 22 comprises all functions and features of a particular type or category. For example, the primary core 22 comprises all electrical and hydraulic and communication input/s and output/s, at least of a particular type, to the apparatus 20, 120, 220, between the SCM manifold and, for example, surface (e.g. via umbilicals).

The method comprises manufacturing the apparatus 20, 120, 220 with only the functions and features required for that apparatus, such as for a particular planned use or deployment of that particular apparatus 20, 120, 220. Accordingly, the apparatus 20, 120, 220 is manufactured with no supplemental, redundant or unnecessary features and functions. For example, the apparatus 20, 120, 220 is manufactured with an optimum number of optional features and functions. The method comprises customising the design and apparatus 20, 120, 220 to provide the manufactured with an optimum number of features and functions, such as an optimum number of features and functions for an envisaged use. Here, the method comprises manufacturing the plurality of SCM manifolds, with each SCM manifold comprising an optimum arrangement of functions and features (e.g. an optimum number and location of control valves or control valve connections).

The method comprises manufacturing each apparatus 20, 120, 220 as a single, monolithic component. The single monolithic component defines a housing of the apparatus 20, 120, 220 being a unitary, integrally-formed seamless component, devoid of internal seams, joins, welds, abutments or the like. Accordingly, the method 10 provides a SCM manifold as a single monolithic monoblock, the monoblock integrally comprising the fluid passages of the SCM manifold.

Here, the method comprises additive manufacturing as the last step 18 of the method of Figure 1. In at least some of the examples, here, the additive manufacturing comprises 3D printing, by Direct Metal Laser Sintering ("DMLS"); of the high pressure monolithic apparatus 20, 120, 220, configured to withstand high pressure, such as with grade metal suitable to withstand the high pressure when 3D printed. The method comprises manufacturing the apparatus 20, 120, 220 without subtractive manufacturing techniques, without either of drilling or milling. The method comprises providing fluid passages integrally-formed in the apparatus 20, 120, 220, without subtractive manufacture, without drilling or milling. Accordingly, the method comprises mitigating, reducing and eliminating: blind passage/s; plugged passage/s or plugged portions thereof; welding and welds; seals; O-rings; internal seals; and attached components. The method comprises providing the fluid passages as continuous, seamless, internal fluid passages, so as to reduce risk or likelihood of accumulations or depositions, such as associated with particles, dirt, condensates or the like that could be carried by or in the fluid passage/s. Here, the method comprises eliminating or at least reducing 'dead space' in the fluid passages, such as dead ends that could otherwise be associated with conventional manifolds, such as produced by cross-drilling.

In other examples (not shown), the method comprises integrally-forming one or more functional devices or features with the apparatus 20, 120, 220, such as integrally-forming one or more valves (e.g. DCV) with the SCM manifold. The method comprises reducing or eliminating a total number of seals and seams and components. As shown in Figures 2 to 8, the method comprises manufacturing a SCM manifold 20, 120, 220 with a reduced number of seals (e.g. o-rings), such as compared to a conventionally-manufactured SCM manifold with milled and drilled fluid passages.

Here, the apparatus 20, 120, 220 is configured to and capable of withstanding a high fluid pressure associated with a hydraulic control fluid. The fluid pressure is High Pressure, such as up to: 50 bar; 100 bar; 200 bar; 250 bar; 300 bar; 500 bar; 1000 bar, dependent upon the application. The fluid pressure is internal, within the internal fluid passages of the apparatus 20, 120, 220. The apparatus 20, 120, 220 is configured to withstand a rapid change in fluid pressure, such as from an environmental or an ambient pressure to a maximum fluid pressure within a short time interval. The method comprises manufacturing the apparatus 20, 120, 220 to withstand rapid fluctuations or oscillations in pressure/s. The apparatus 20, 120, 220 is configured to withstand or contain multiple fluid pressures simultaneously, such as with different fluid pressures in different portions or passages of the apparatus 20, 120, 220. The apparatus 20, 120, 220 is configured to withstand pressure differentials, such as between internal and external pressures.

As is shown in Figures 5 to 8, the method comprises manufacturing a plurality of apparatuses 20, 120, 220, the plurality here comprising an array of single, monolithic SCM manifolds 20, 120, 220. The primary core 22 comprises a blueprint for manufacturing the plurality of apparatuses 20, 120, 220, the primary core 22 comprising features common or generic to each of the apparatuses 20, 120, 220 of the plurality.

Here, the common or generic features comprise all of: the Low Pressure ("LP") Supply Selection 180; the High Pressure ("HP") Supply Selection 182; the LP Supply Flowmeter 184; the HP Supply Flowmeter 186: the LP Return Flowmeter 188; the HP Return Flowmeter 190; the Annulus Master Valve DCV 150; the Annulus Wing Valve DCV 152; the Subsurface Safety Valve Close DCV 154; the Crossover Valve; the Production Choke Valve Close DCV 156; the Production Choke Valve Open DCV 158; the Subsurface Safety Valve Open DCV 160; the isolation valve 1 DCV 162; an isolation valve 2 DCV 164; the isolation valve 3 DCV 166; the crossover valve DCV 168; the Production Wing Valve 170; and the Production Master Valve DCV 172.

It will be appreciated, that the method here comprises designing and manufacturing the apparatus 20, 120, 220 to provide an optimised apparatus 20, 120, 220, being optimised for manufacture; transport; deployment and use. In particular here, the method comprises optimising the design and manufacture of the apparatus 20, 120, 220 to minimise or at least reduce redundant or unnecessary material and features: a combination of the modular design approach and additive manufacturing, ensuring that there is a minimised amount of material used in manufacture to provide a suitable apparatus 20, 120, 220.

Typical well control functions provided by the SCM manifold 20, 120, 220 can include actuating one or more of: fail-safe return production tree actuators and/or downhole safety valves; flow control choke valves, shutoff valves, etc.; manifold diverter valves, shutoff valves, etc.; chemical injection valves; surface-controlled reservoir analysis and monitoring systems, sliding sleeve, choke valves. The SCM 20, 120, 220 can provide monitoring including one or more of: (surface-controlled) reservoir analysis and monitoring systems, sliding sleeve, choke valves; downhole pressure, temperature, and flow rates; sand probes and/or production tree and/or manifold pressures, temperatures, and/or choke positions.

The method here does not require a bespoke development of a complete model or design for each different or distinct manifold 20, 120, 220. The provision of a primary core 22 common or generic to each of the different manifolds 20, 120, 220 eliminates much of the development work, simulation, analysis and design associated with a new or subsequent manifold 20, 120, 220. The availability of selectable optional modules 26, 126, 226, enables a fast, reliable creation of an optimised manifold 20, 120, 220.

Such additive and hybrid manufacturing methods allow hydraulic manifolds 20, 120, 220 to be printed using minimum required materials and creating fluid paths without dead ends or the need to weld in plugs. The current disclosure combines these manufacturing methods with product design canto enable hydraulic systems for subsea control modules to be tailored to the exact application providing a fully digital delivery process (e.g. sales order to manufactured part) without the need to perform design validation each time. Each part in the make to order process can be printed with only the function positions actually required.

This approach here builds on an in-depth knowledge of the subsea system applications. Functions required for all subsea systems are identified and included in a non-configurable core design. This provides the foundation or main structure on which the optional functions are built. The basic or core functions are interdependent for structural integrity as these will never be removed. A modular, repeatable cell structure is then added to the core design where each cell provides an additional function (e.g. valve position). The configurability is achieved by establishing an optimised pattern design where each configurable cell has its own structural integrity, independent of the others. In a further step, not shown here, a simplified pilotless control valve is integrated into the cells thus removing multiple leak paths. In at last some examples, the methods here eliminate as many as 120 o-ring seals and a similar number of fasteners compared to conventional methods.

The presently-disclosed methods have multiple benefits for subsea control modules. In at least some examples, the method provides that a true make to order process can be established where a sales engineer enters customer requirements through a menu driven interface leading to automatic configuration (engineer to order) of the hydraulic circuit. Each manifold is printed specifically for the client application requirement with no waste and no requirement to plug unused functions. Each application specific manifolds resulting from the digital delivery process do not require design validation, at least due to the cell structure design. Multiple leak paths are removed from the control module, leading to increased reliability. There is no welding of manifold plugs and no risk of dead ends due to cross drilling. Weight of the hydraulic circuit may be reduced by as much as 75%, compared to conventional methods.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims.

The applicant indicates that aspects of the present invention may consist of any such individual feature or combination of features. It should be understood that the embodiments described herein are merely exemplary and that various modifications may be made thereto without departing from the scope of the invention, as defined in the appended claims.

## Claims

1. A method of manufacturing a subsea control module ("SCM") manifold (20, 120, 220), the method comprising
defining a primary core (22) of the SCM manifold (20, 120, 220), the primary core (22) comprising basic features generic to a plurality of versions of SCM manifold (20, 120, 220),
selecting optional features in addition to the basic functionality; and
manufacturing the SCM manifold (20, 120, 220), the SCM manifold (20, 120, 220) being manufactured to include the primary core (22) and the optional features integrally-formed as a single monolithic component;
wherein the SCM manifold (20, 120, 220) is manufactured using additive manufacturing.

2. The method of claim 1, wherein the method comprises selecting the optional features from a plurality of predefined optional features, and wherein the optional features are predefined such that validation, analysis and verification of the SCM manifold (20, 120, 220) is reduced or eliminated.

3. The method of any preceding claim, wherein the method comprises providing only a limited selection of optional features from which to select such that all permutations are at least one of: certified; validated; approved; and within specified parameters.

4. The method of any preceding claim, wherein the method comprises ensuring that the SCM manifold (12, 120, 220) is compliant without requiring post-design verification, validation or testing; and without requiring post-manufacturing verification, validation or testing.

5. The method of any preceding claim, wherein the method comprises providing the SCM manifold (20, 120, 220) with a basic number of control valve connections (24) in the primary core (22), with additional control valve connections (24) being selectable as optional features.

6. The method of any preceding claim, wherein the method comprises providing the SCM manifold (20, 120, 220) with control valve/s integrally-formed within the single monolithic component.

7. The method of any preceding claim, wherein the method comprises manufacturing the SCM manifold (20, 120, 220) without subtractive manufacturing techniques, including without either of drilling or milling.

8. The method of any preceding claim, wherein the method comprises providing one or more passages, recesses and/or chambers for fluid in the SCM manifold (20, 120, 220); the passages, recesses and/or chambers being integrally-formed in the single monolithic component, and optionally wherein the method comprises providing each fluid passage as a seamless, continuous internal passage.

9. The method of any preceding claim, wherein the method comprises mitigating one or more of: blind passage/s; plugged passage/s or plugged portions thereof; welding and/or welds; seals; O-rings; internal seals; and/or attached components.

10. The method of any preceding claim, wherein the method comprises prohibiting the customisation of the primary core (22) following the definition of the primary core (22).

11. The method of any preceding claim, wherein the method comprises defining the primary core (22) wherein the primary core comprises all electrical and/or hydraulic and/or communication input/s and/or output/s, at least of a particular type, to the apparatus, and optionally wherein the method comprises providing the primary core (22) with all connections of a particular type between the SCM manifold and surface.

12. The method of any preceding claim, wherein the method comprises the manufacture of the plurality of versions of SCM manifold (20, 120, 220).

13. A SCM manifold (20, 120, 220) manufactured according to the method of any of claims 1 to 12.

14. A plurality of SCM manifolds (20, 120, 220) according to claim 13, each of the plurality of SCM manifolds comprising a same primary core (22) and different optional features.

## Patentansprüche

1. Verfahren zum Herstellen eines Verteilers (20, 120, 220) für ein Unterwasser-Steuerungsmodul ("SCM"), wobei das Verfahren Folgendes umfasst
Definieren eines Primärkerns (22) des SCM-Verteilers (20, 120, 220), wobei der Primärkern (22) grundlegende Merkmale umfasst, die für eine Vielzahl von Versionen des SCM-Verteilers (20, 120, 220) generisch sind,
Auswählen optionaler Merkmale zusätzlich zur grundlegenden Funktionalität; und
Herstellen des SCM-Verteilers (20, 120, 220), wobei der SCM-Verteiler (20, 120, 220) so hergestellt wird, dass er die Merkmale des Primärkerns (22) und die optionalen Merkmale enthält, die integral als eine einzelne monolithische Komponente ausgebildet sind,
wobei der SCM-Verteiler (20, 120, 220) unter Verwendung additiver Herstellung hergestellt wird.

2. Verfahren nach Anspruch 1, wobei das Verfahren Auswählen der optionalen Merkmale aus einer Vielzahl von vordefinierten optionalen Merkmalen umfasst und wobei die optionalen Merkmale so vordefiniert sind, dass eine Validierung, Analyse und Verifizierung des SCM-Verteilers (20, 120, 220) reduziert oder eliminiert wird.

3. Verfahren nach einem vorhergehenden Anspruch, wobei das Verfahren Bereitstellen nur einer begrenzten Auswahl optionaler Merkmale umfasst, aus denen auszuwählen ist, sodass alle Permutationen mindestens eines der Folgenden sind: zertifiziert; validiert; genehmigt; und innerhalb spezifizierter Parameter.

4. Verfahren nach einem vorhergehenden Anspruch, wobei das Verfahren Sicherstellen, dass der SCM-Verteilers (12, 120, 220) konform ist, umfasst, ohne dass nach der Konstruktion eine Verifizierung, Validierung oder Prüfung erforderlich ist, und ohne dass nach der Herstellung eine Verifizierung, Validierung oder Prüfung erforderlich ist.

5. Verfahren nach einem vorhergehenden Anspruch, wobei das Verfahren Versehen des SCM-Verteilers (20, 120, 220) mit einer grundlegenden Anzahl von Steuerventilverbindungen (24) in dem Primärkern (22) umfasst, wobei zusätzliche Steuerventilverbindungen (24) als optionale Merkmale auswählbar sind.

6. Verfahren nach einem vorhergehenden Anspruch, wobei das Verfahren Versehen des SCM-Verteilers (20, 120, 220) mit (einem) Steuerventil(en) umfasst, das/die integral in der einzelnen monolithischen Komponente ausgebildet ist/sind.

7. Verfahren nach einem vorhergehenden Anspruch, wobei das Verfahren Herstellen des SCM-Verteilers (20, 120, 220) ohne subtraktive Herstellungstechniken, einschließlich ohne sowohl Bohren als auch Fräsen, umfasst.

8. Verfahren nach einem vorhergehenden Anspruch, wobei das Verfahren Bereitstellen eines oder mehrerer Durchgänge, Aussparungen und/oder Kammern für Fluid in dem SCM-Verteiler (20, 120, 220) umfasst, wobei die Durchgänge, Aussparungen und/oder Kammern in der einzelnen monolithischen Komponente integral ausgebildet sind, und wobei das Verfahren optional Bereitstellen jedes Fluiddurchgangs als einen nahtlose, kontinuierlichen internen Durchgang umfasst.

9. Verfahren nach einem vorhergehenden Anspruch, wobei das Verfahren Begrenzen von einem oder mehreren von Folgendem umfasst: Blinddurchgang/-durchgänge; verstopfte(r) Durchgang/Durchgänge oder verstopfte Abschnitte davon; Schweißung und/oder Schweißnähte; Dichtungen; O-Ringe; interne Dichtungen; und/oder angebrachte Komponenten.

10. Verfahren nach einem vorhergehenden Anspruch, wobei das Verfahren Verhindern der Anpassung des Primärkerns (22) nach der Definition des Primärkerns (22) umfasst.

11. Verfahren nach einem vorhergehenden Anspruch, wobei das Verfahren Definieren des Primärkerns (22) umfasst, wobei der Primärkern alle elektrischen und/oder hydraulischen und/oder Kommunikationseingänge und/oder -ausgänge, mindestens eines bestimmten Typs, zu der Vorrichtung umfasst, und wobei das Verfahren optional Versehen des Primärkerns (22) mit allen Verbindungen eines spezifischen Typs zwischen dem SCM-Verteiler und der Oberfläche umfasst.

12. Verfahren nach einem vorhergehenden Anspruch, wobei das Verfahren die Herstellung der Vielzahl von Versionen des SCM-Verteilers (20, 120, 220) umfasst.

13. SCM-Verteiler (20, 120, 220), gemäß dem Verfahren nach einem der Ansprüche 1 bis 12 hergestellt.

14. Vielzahl von SCM-Verteilern (20, 120, 220) gemäß Anspruch 13, wobei jeder der Vielzahl von SCM-Verteilern einen gleichen Primärkern (22) und verschiedene optionale Merkmale umfasst.

## Revendications

1. Procédé de fabrication d'un collecteur de module de commande sous-marin (« SCM ») (20, 120, 220), le procédé comprenant
la définition d'un noyau primaire (22) du collecteur SCM (20, 120, 220), le noyau primaire (22) comprenant des caractéristiques de base génériques pour une pluralité de versions du collecteur SCM (20, 120, 220),
le choix des caractéristiques éventuelles en plus des caractéristiques de base ; et
la fabrication du collecteur SCM (20, 120, 220), le collecteur SCM (20, 120, 220) étant fabriqué pour comprendre le noyau primaire (22) et les caractéristiques éventuelles formées d'un seul tenant sous la forme d'un seul composant monolithique ;
ledit collecteur SCM (20, 120, 220) étant fabriqué par fabrication additive.

2. Procédé de la revendication 1, ledit procédé comprenant le choix des caractéristiques éventuelles parmi une pluralité de caractéristiques éventuelles prédéfinies, et lesdites caractéristiques éventuelles étant prédéfinies de sorte que la validation, l'analyse et la vérification du collecteur SCM (20, 120, 220) soient réduites ou éliminées.

3. Procédé d'une quelconque revendication précédente, ledit procédé comprenant la fourniture uniquement d'un choix limité de caractéristiques éventuelles parmi lesquelles choisir de sorte que toutes les permutations soient au moins une parmi : certifiée ; validée ; approuvée; et dans les paramètres spécifiés.

4. Procédé d'une quelconque revendication précédente, ledit procédé comprenant l'assurance que le collecteur SCM (12, 120, 220) est conforme sans nécessiter de vérification, de validation ou d'essai après conception ; et sans nécessiter de vérification, de validation ou d'essai après fabrication.

5. Procédé d'une quelconque revendication précédente, ledit procédé comprenant la fourniture au collecteur SCM (20, 120, 220) d'un nombre de base de raccords (24) de vanne de commande dans le noyau primaire (22), des raccords (24) de vanne de régulation supplémentaires pouvant être choisis en tant que caractéristiques éventuelles.

6. Procédé d'une quelconque revendication précédente, ledit procédé comprenant la fourniture au collecteur SCM (20, 120, 220) d'une ou plusieurs vannes de commande formées d'un seul tenant à l'intérieur du composant monolithique unique.

7. Procédé d'une quelconque revendication précédente, ledit procédé comprenant la fabrication du collecteur SCM (20, 120, 220) sans techniques de fabrication soustractives, comprenant aucun perçage ou aucun fraisage.

8. Procédé d'une quelconque revendication précédente, ledit procédé comprenant la fourniture d'un ou plusieurs passages, évidements et/ou chambres pour fluide dans le collecteur SCM (20, 120, 220) ; les passages, évidements et/ou chambres étant intégralement formés dans le composant monolithique unique, et éventuellement, ledit procédé comprenant la fourniture de chaque passage de fluide sous la forme d'un passage interne continu et sans joint.

9. Procédé d'une quelconque revendication précédente, ledit procédé comprenant la minimisation d'un ou plusieurs parmi : un ou des passages borgnes ; un ou des passages bouchés ou parties bouchées de ceux-ci ; un soudage et/ou des soudures ; des joints d'étanchéité ; des joints toriques ; des joints d'étanchéités internes ; et/ou des composants attachés.

10. Procédé d'une quelconque revendication précédente, ledit procédé comprenant l'interdiction de la personnalisation du noyau primaire (22) suite à la définition du noyau primaire (22).

11. Procédé d'une quelconque revendication précédente, ledit procédé comprenant la définition du noyau primaire (22), ledit noyau primaire comprenant toutes les entrées et/ou sorties électriques et/ou hydrauliques et/ou de communication, d'au moins un type particulier, pour l'appareil, et éventuellement, ledit procédé comprenant la fourniture au noyau primaire (22) de tous les raccords d'un type particulier entre le collecteur SCM et la surface.

12. Procédé d'une quelconque revendication précédente, ledit procédé comprenant la fabrication de la pluralité de versions de collecteur SCM (20, 120, 220).

13. Collecteur SCM (20, 120, 220) fabriqué selon le procédé de l'une quelconque des revendications 1 à 12.

14. Pluralité de collecteurs SCM (20, 120, 220) selon la revendication 13, chacun de la pluralité de collecteurs SCM comprenant un même noyau primaire (22) et différentes caractéristiques éventuelles.
